## Europäisches Patentamt

## European Patent Office

## Office européen des brevets

(19)

(11) Veröffentlichungsnummer: **0 003 968**
**B1**

(12) **EUROPÄISCHE PATENTSCHRIFT**

(45) Veröffentlichungstag der Patentschrift:
**20.10.82**

(21) Anmeldenummer: **79100353.6**

(22) Anmeldetag: **08.02.79**

(51) Int. Cl.³: **F 16 B  5/00,** B 60 R  13/04,
F 16 B  11/00

(54) Verfahren zum Aufbringen eines selbstklemmenden Profilstreifens auf einen Halteflansch und Ausbildung dieses Profilstreifens.

(30) Priorität: **20.02.78  DE 2807115**

(43) Veröffentlichungstag der Anmeldung:
**19.09.79 Patentblatt 79/19**

(45) Bekanntmachung des Hinweises auf die Patenterteilung:
**20.10.82 Patentblatt 82/42**

(84) Benannte Vertragsstaaten:
**BE DE FR GB IT NL SE**

(56) Entgegenhaltungen:
**DE-A-2 133 484**
**DE-B-2 354 016**
**US-A-2 928 201**

(73) Patentinhaber: **Schlegel GmbH, BredowstraBe 33,
D-2000 Hamburg 74 (DE)**

(72) Erfinder: **Hormanns, Rolf, Pfitznerstrasse 67,
D-2000 Hamburg 50 (DE)**

(74) Vertreter: **Glawe, Richard, Dr. et al,
Rothenbaumchaussee 58, D-2000 Hamburg 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Verfahren zum Aufbringen eines selbstklemmenden Profilstreifens auf einen Halteflansch und Ausbildung dieses Profilstreifens.

Es ist bekannt, Dichtungsprofile für Automobile mit der sie haltenden Karosseriefläche zu verkleben. Zu diesem Zweck wird ein Haftkleber sowohl auf die Karosseriefläche als auch auf die zugehörige Profiloberfläche aufgebracht. Nach dem Auftrocknen des Klebers werden die Teile zusammengefügt. Diese Art der Verbindung des Dichtungsstreifens mit der Karosserie hat den Nachteil, dass der Kleber an der Karosserie auch seitlich des von dem Dichtungsstreifen bedeckten Bereichs sichtbar ist, wo er einen unsauberen Eindruck hinterlässt. Ausserdem ist diese Art der Verklebung auf einseitig flächige Verbindungen beschränkt, bei denen die mit dem Haftkleber beschichteten Teile durch eine quer zur Verbindungsfläche verlaufende Bewegung zusammengeführt werden können. Bekanntlich kann man nämlich mit einem angetrockneten Haftkleber versehene Oberflächen nicht aufeinanderliegend parallel zur Verbindungsebene verschieben.

Im Querschnitt U-förmige Profilstreifen werden deshalb nicht verklebt. Man sichert sie auf dem Halteflansch durch Klemmung. Sie werden daher selbstklemmend ausgeführt, indem sie mit einer elastischen Stahleinlage versehen werden. Ihre mit dem Halteflansch zusammenwirkende Oberflächenbereiche werden möglichst stark haftend, beispielsweise aus weichem Werkstoff mit nach innen weisender Lippenform, ausgeführt. Dabei ist die Haltesicherheit abhängig von der Klemmkraft. Je grösser die Klemmkraft ist, um so grösser ist aber auch die zur Montage erforderliche Kraft. Um Klemmprofile mit hoher Klemmkraft verwenden zu können, ist es daher in der Automobilindustrie vielfach üblich, den Halteflansch vor dem Aufbringen des Klemmprofils mit einem Gleitmittel zu versehen. Die Verdunstungszeit der gebräuchlichen Gleitmittel ist aber verhältnismässig gross, so dass zwischen dem Halteflansch und dem Klemmprofil verbleibende Reste desselben die Haltesicherheit des Profils in der anfänglichen Gebrauchszeit des Fahrzeugs beeinträchtigen.

Ausserdem haben die selbstklemmend ausgebildeten Profilstreifen den Nachteil verhältnismässig hoher Kosten, weil die Herstellung und Einbringung der elastischen Stahleinlage und die sorgfältige Formung der mit dem Halteflansch zusammenwirkenden Profiloberfläche aufwendig sind.

Der Erfindung liegt daher die Aufgabe zugrunde, ein Verfahren zum Aufbringen eines im Querschnitt U-förmigen, selbstklemmenden Profilstreifens auf einen Halteflansch insbesondere eines Automobils, bei dem der Halteflansch mit einem flüssigen Gleitmittel benetzt wird, dahingehend zu verbessern, dass eine grössere Haltesicherheit erreicht wird.

Die erfindungsgemässe Lösung besteht darin, dass als Gleitmittel ein den Werkstoff des Profilstreifens in dem am Halteflansch anzuliegen bestimmten Oberflächenbereich anlösendes Lösungsmittel verwendet wird, das frei von eine haftende Schicht bildenden Stoffen ist. Alternativ kann das Lösungsmittel auf den am Halteflansch anzuliegen bestimmten Oberflächenbereich des Profilstreifens aufgebracht werden.

Damit das Lösungsmittel den Halteflansch gleichmässig benetzt und leicht aufgebracht werden kann, enthält es zweckmässigerweise ein Dickungsmittel wie beispielsweise «Aerosil» (eingetr. Warenzeichen) oder andere Stoffe, die die Konsistenz des Lösungsmittels in gewünschter Weise beeinflussen, ohne eine an der Karosserie oder am Profilstreifen fest haftende, den optischen Eindruck störende Schicht zu bilden. Sie können als Staubschicht zurückbleiben, die sich leicht abwischen lässt oder von selbst abfällt.

Das Lösungsmittel erleichtert zunächst das Aufbringen des Profilstreifens auf den Halteflansch, weil es die Reibung vermindert. Danach wird es zu einer allmählichen Erweichung des Profilstreifenwerkstoffs dort führen, wo er unter der Klemmkraft am Halteflansch anliegt. Je nach Einwirkungsdauer und Stoffauswahl wird die Erweichung mehr oder weniger tief wirken und zu einer innigen Anlage an dem Halteflansch führen. Je tiefer die Erweichung wirkt, um so grössere Flanschunebenheiten können ausgeglichen werden. Man wünscht im allgemeinen eine lange Einwirkungsdauer, damit eine tiefgehende Erweichung mit entsprechend guter Anpassung des Profilstreifens an die Flanschoberfläche stattfinden kann, ohne dass der oberflächennahe Bereich des Profilstreifens dünnflüssig wird und zerfliesst. Es soll nämlich auch während des Einwirkens des Lösungsmittels eine zur Lagesicherung des Profilstreifens auf dem Halteflansch ausreichende Haftung gewährleistet sein.

Die Aufbringung des Lösungsmittels auf den Halteflansch wird im allgemeinen bevorzugt, weil dieser besser zugänglich ist als die Innenfläche des Profilstreifens und weil bei Aufbringung des Lösungsmittels auf den Halteflansch die Einwirkung des Lösungsmittels sich im wesentlichen auf diejenigen Oberflächenbereiche des Profilstreifens beschränkt, die am Halteflansch anliegen, während die nicht am Halteflansch anliegenden Teile nicht mit dem Lösungsmittel in Kontakt kommen und daher ihre ursprüngliche Festigkeit behalten. Jedoch kann in bestimmten Fällen auch die Aufbringung auf den Profilstreifen Vorteile haben, wenn man zum Beispiel das Lösungsmittel während einer gewissen Zeitdauer auf den Profilstreifen einwirken lassen will, bevor er montiert wird.

Wenn der Oberflächenbereich des Profilstreifens stark angelöst wird, kann sich eine innige Klebverbindung mit der Flanschoberfläche ergeben. Diese wird zwar bevorzugt, ist aber nicht unbedingt erforderlich, weil schon bei geringerer Erweichung eine innige Formanpassung der Profilstreifenoberfläche an die stets vorhandenen kleinen Unebenheiten der Flanschoberfläche stattfindet, die auch ohne eigentliche Klebeverbindung eine ausgezeichnete Haftung garantiert.

Die Erweichung des Profilstreifenwerkstoffs kann auf beiden Halteflanschseiten vorgesehen werden, indem beide Seiten mit dem Lösungsmittel benetzt werden und indem beide Seiten des Profilstreifens hinsichtlich der Materialwahl entsprechend vorbereitet werden. Bevorzugt wird jedoch eine nur einseitige Auftragung des Lösungsmittels auf den Halteflansch. Dies hat nicht nur eine nahezu gleiche Wirkung, sondern ergibt auch den Vorteil, dass der Profilstreifen durch den unmittelbaren Kontakt zwischen Profilstreifen und Halteflansch auf der nicht mit Lösungsmittel benetzten Seite sich im Montagezustand sicher in der vorgegebenen Lage hält. Es braucht dann auch nicht unbedingt darauf geachtet zu werden, dass der erweichte Werkstoff genügend erhärtet ist, bis bei der weiteren Montage des Fahrzeugs oder im Gebrauch eine gewisse Krafteinwirkung auf den Profilstreifen stattfinden darf.

Zwischen der Anbringung der Profilstreifen am Kraftfahrzeug bis zum Ende des Fliessbandes vergehen im allgemeinen mehrere Stunden. Diese Zeit reicht im allgemeinen für eine so weitgehende Trocknung des Lösungsmittels aus, dass der Profilstreifen bei üblichem Gebrauch des Fahrzeugs die vorgeschriebene Lage nicht verliert. Es steht daher genügend Zeit zur Verfügung, um ein verhältnismässig langsam trocknendes Lösungsmittel mit entsprechend langer Einwirkungsdauer auswählen zu können. Man kann daher bei geeigneter Wahl des die Oberfläche des Profilstreifens bildenden Werkstoffs und des Lösungsmittels eine verhältnismässig tiefgehende Erweichung erreichen. Dies ergibt nicht nur eine gute Haftung des Profilstreifens am Halteflansch, sondern auch eine verbesserte Abdichtung. Die Auswahl eines verhältnismässig wenig flüchtigen Lösungsmittels hat auch den Vorteil, dass leichter ein solches ausgewählt werden kann, das die Oberflächenschicht des Halteflanschs, die von dem noch jungen Karosserielack gebildet ist, nicht angreift.

Ein wichtiger Vorteil der Erfindung besteht darin, dass der am Halteflansch fest verankerte Profilstreifen der Schrumpfungsneigung, die sonst häufig zu schlechtem Sitz des Profilstreifens am Karosserieflansch führt, nicht nachgeben kann und daher auch nach längerer Zeit die gewünschte Lage beibehält. Es kommt auch vor, dass Kraftfahrzeugkarosserien nach der Montage des Profilstreifens wegen Nachlackierung noch einmal erhitzt werden müssen. Bekannte Profilstreifen verlieren dabei oftmals ihre Haltekraft und fallen ab oder verschieben sich. Im Falle der erfindungsgemässen Anbringung ist dies nicht zu befürchten, weil das Lösungsmittel bei der Erhitzung rasch trocknet und dadurch die Klebeverbindung zwischen dem Profilstreifen und dem Karosserieflansch vollendet wird.

Es kann zweckmässig sein, dass der am Halteflansch anzuliegen bestimmte Bereich des Profilstreifens geriefelt ist, d.h. so aufgerauht (insbes. durch linienförmige Einkerbungen), dass Taschen zur Aufnahme des Lösungsmittels gebildet werden.

Profilstreifen der betrachteten Art können – abgesehen von ihren am Halteflansch anliegenden Bereichen, die von dem Lösungsmittel angelöst werden sollen – beliebig aufgebaut sein und aus beliebigen Werkstoffen bestehen. Bevorzugt wird jedoch die Herstellung aus Elastomeren oder Plastomeren wie Polyvinylchlorid. Dieser Werkstoff wird von bestimmten Lösungsmitteln angelöst, so dass er sich in manchen Fällen unmittelbar zur Ausübung des Verfahrens eignen mag. Zweckmässiger ist es jedoch, die an dem Halteflansch anzuliegen bestimmte Oberfläche des Profilstreifens durch eine Beschichtung aus einem von dem Lösungsmittel leicht anlösbaren Werkstoff zu bilden. Dies ergibt den Vorteil, dass man die Beschichtung auf das Material des Profilstreifens unter Bedingungen aufbringen kann, die für die Verbindung mit dem Grundwerkstoff des Profilstreifens besonders günstig sind und in der Regel nicht dieselben sind wie die, die bei der Montage des Streifens herrschen. So kann die Beschichtung beispielsweise gemeinsam mit dem Grundwerkstoff des Profilstreifens extrudiert werden oder auch aus dem schmelzflüssigen oder gelösten Zustand auf den kalten oder warmen Grundwerkstoff des Profilstreifens aufgetragen werden. Ferner ergibt dies die Möglichkeit, das Lösungsmittel so auszuwählen, dass es den Werkstoff, der den Profilstreifen hauptsächlich bildet, nicht angreift.

Sobald die Klebeverbindung zwischen dem Profilstreifen und dem Halteflansch vollendet ist, wird die Haltesicherheit nicht mehr oder nicht ausschliesslich durch die Klemmkraft des Profilstreifens vorgegeben. Jedoch ist die Qualität dieser Klebeverbindung und insbesondere die Dichtigkeit der Verbindung von der Klemmkraft des Profilstreifens während des erweichten Zustands der Oberflächenschicht des Profilstreifens abhängig. Es ist daher erforderlich, dass der Profilstreifen mit Einrichtungen zur Erzeugung einer ausreichenden Klemmkraft versehen ist, die zweckmässigerweise von den bekannten elastischen Metalleinlagen gebildet sein können. Da jedoch die Klemmkraft, wie oben ausgeführt, nur während der Erweichungs- und ggf. Abbindezeit der mit dem Halteflansch sich verklebenden Oberflächenschicht des Profilstreifens notwendig ist, können die die Klemmkraft des Profilstreifens gewährleistenden Einrichtungen auch von aus Kunststoff bestehenden Querschnittsteilen des Profilstreifens gebildet sein, die bislang für die Erzeugung der Klemmkraft nicht als geeignet angesehen wurden, weil sie ermüden. Im Falle der Erfindung ist eine Ermüdung jedoch unschädlich, wenn sie sich erst nach der Erweichungs- und ggf. Aushärtungszeit der angelösten Querschnittsteile bemerkbar macht. Der Profilstreifen kann daher frei von einer Metalleinlage hergestellt werden, und es genügt, wenn er einen zumindest kurzfristig unter elastischer Verformung eine Klemmkraft erzeugenden Querschnittsteil umfasst, der zweckmässigerweise aus einem thermoplasti-

schen Werkstoff besteht, damit der auf billige Weise hergestellt und ggf. gemeinsam mit dem übrigen Querschnittsteil des Profilstreifens extrudiert werden kann.

Ähnliches gilt für den Werkstoff der am Halteflansch anliegenden Profilteile, die im allgemeinen lippenartig ausgebildet sind, um Toleranzen ausgleichen und auf Dauer die Klemmkraft elastisch übertragen zu können. An ihre Dauerelastizität brauchen im Falle der Erfindung keine hohen Anforderungen gestellt zu werden.

Es steht zwar eine grosse Zahl von polymeren Werkstoffen zur Verfügung, die sich von einem Lösungsmittel im Sinne der Erfindung leicht erweichen lassen, um eine Klebverbindung mit dem Halteflansch einzugehen. Jedoch kann man nicht bei allen diesen Werkstoffen eine ausreichend feste Kleb- oder Schweisserbindung mit dem Grundmaterial des Profilstreifens (meist PVC) erwarten. Es kann daher zweckmässig sein, die mit dem Halteflansch zusammenzuwirken bestimmten Profilteile formschlüssig mit dem Grundkörper des Profilstreifens zu verbinden.

Die Erfindung wird im folgenden näher unter Bezugnahme auf die Zeichnung erläutert, die vorteilhafte Ausführungsbeispiele des Profilstreifens veranschaulicht. Es zeigen:

Fig. 1 den Querschnitt einer ersten Ausführungsform eines Kantenschutzprofils mit Stahleinlage,

Fig. 2 eine zweite Ausführungsform ähnlichen Querschnitts ohne Stahleinlage und mit formschlüssiger Verankerung der Lippen im Profil-Grundkörper,

Fig. 3 eine dritte Ausführungsform mit nur einer Lippe und

Fig. 4 die dritte Ausführungsform an einem Halteflansch.

Wie bekannt, besteht jeder der drei als Kantenschutzstreifen dargestellten Profilstreifen aus einem U-förmigen Grundkörper aus beispielsweise hart eingestelltem Polyvinylchlorid und innerhalb des von den Schenkeln des Grundkörpers eingeschlossenen Raums nach innen gerichteten Halteelementen. Diese bestehen in den ersten beiden Ausführungsbeispielen aus Klemmlippen 2, 3, die sich beim Aufschieben des Profilstreifens auf einen Halteflansch unter elastischer Verformung an diesen klemmend anlegen. Die dritte Ausführungsform enthält eine Klemmlippe 6 und auf der gegenüberliegenden Seite eine kleine Abdichtungslippe 7 und zwei Gruppen 8 von Riefelungen oder niedrigen längs verlaufenden Rippen. Die grosse Klemmlippe 6 ist dazu vorgesehen, durch elastische Verformung eine Klemmkraft zu erzeugen, während die Dichtungslippe 7 und die Riefelungen 8 die Haftkraft am Halteflansch erhöhen sollen. Der Grundkörper 1 der ersten und dritten Ausführungsform enthält eine die Klemmkraft verstärkende Stahleinlage 4, während der Grundkörper 1 der Ausführungsform gemäss Fig. 2 eine solche Einlage nicht enthält und aufgrund geeigneter Material- und Querschnittswahl selbst in der Lage ist, die Klemmkraft zumindest während einer für die Entstehung der Haftverbindung mit dem Halteflansch ausreichenden Zeit zu erzeugen.

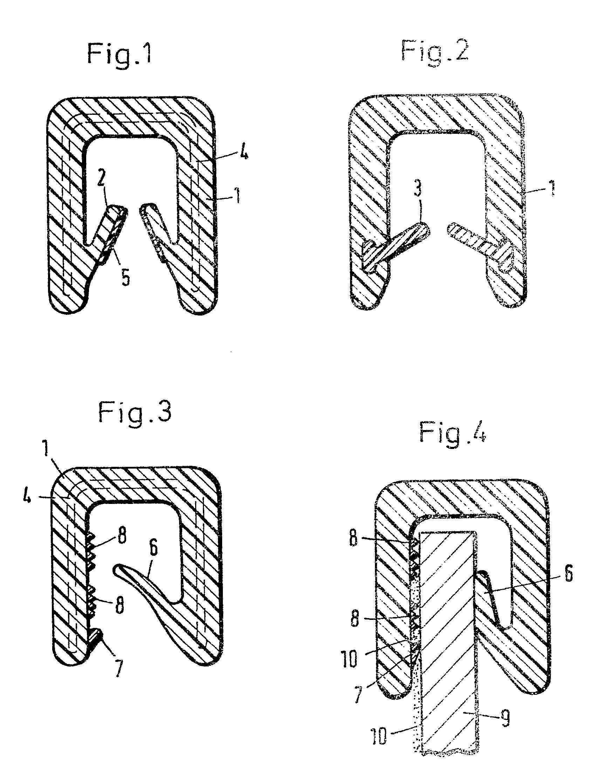

In der Ausführungsform gemäss Fig. 1 bestehen die Lippen 2 im wesentlichen aus demselben Material wie der Grundkörper 1. Sie können gewünschtenfalls auch aus einem anderen, vorzugsweise weicher eingestellten Werkstoff bestehen, der gemeinsam mit dem Grundkörper extrudiert und mit diesem verschweisst ist. Die dem Halteflansch zugewendeten Oberflächen der Lippen 2 sind mit einer Schicht 5 aus einem Kunststoff versehen, der sich einerseits mit dem Material der Lippen 2 gut verbindet und anderseits durch das vor der Montage auf den Halteflansch aufgebrachte Lösungsmittel so weit angelöst wird, dass es erweicht, sich im erweichten Zustand unter der Klemmkraft innig an die Flanschoberfläche anlegt und eine mehr oder weniger starke Klebverbindung damit eingeht, wodurch nicht nur die Haltesicherheit, sondern auch die Dichtigkeit verbessert wird. Die Auflage 5 kann mit den Lippen 2 gemeinsam extrudiert sein. Sie kann aber auch nachträglich durch ein beliebiges Verfahren aufgebracht sein. Sie kann eine Dicke vorzugsweise in der Grössenordnung von $1/100$ bis $8/10$ mm haben.

Im Ausführungsbeispiel gemäss Fig. 2 bestehen die Lippen 3 vollständig aus einem durch das Lösungsmittel erweichbaren Material, das zwecks besserer Verbindung mit dem Grundkörper 1 formschlüssig in diesen eingelassen ist. Der Grundkörper 1 und die Lippen 3 können gemeinsam extrudiert sein. Die Lippen können aber auch nachträglich in den Grundkörper eingesetzt sein. Die in den Figuren gezeigten Profile können auch als Halteprofil für damit verbundene Dichtungsstreifen und dergleichen benutzt werden.

Im dritten Ausführungsbeispiel besteht die Klemmlippe 6 aus dem Werkstoff des Grundkörpers 1, während die Dichtungslippe 7 und der Rippen 8 aus dem anlösbaren Werkstoff bestehen. Wenn dieser Profilstreifen gemäss Fig. 4 auf einen Halteflansch 9 aufgeschoben wird, dessen eine Seite mit einer Lösungsmittelschicht 10 versehen wurde, so benetzt das Lösungsmittel auch die Profilteile 7 und 8 und wird auch zu einem Teil zwischen diesen Teilen gefangen. Es diffundiert nun in die Teile 7 und 8 ein und erweicht diese, so dass sie mit der Flanschoberfläche verkleben oder sich zumindest der Form dieser Oberfläche getreu anpassen, wodurch ihre Haftung daran stark vergrössert wird. Das Lösungsmittel dringt jedoch nicht oder nur wenig in den Werkstoff des Grundprofils ein, so dass dieser seine Festigkeit behält. Die andere Seite des Halteflanschs wurde nicht mit einem Lösungsmittelauftrag versehen, so dass die Lippe 6 ihre Festigkeit und Elastizität behält, um den Profilstreifen bis zum hinreichenden Trocknen des Lösungsmittels in der gewünschten Lage zu halten. Das ausserhalb des Profilstreifens am Halteflansch befindliche Lösungsmittel trocknet weg, ohne einen haftenden Rückstand zu hinterlassen.

Als Werkstoff für diejenigen Profilteile, die von dem Lösungsmittel angelöst werden sollen, eignet sich beispielsweise Polyvinylbutyral in Verbindung mit einem Alkohol, beispielsweise Isopropanol, als Lösungsmittel. Man kann auch Zelluloseacetat als Lippenmaterial verwenden und die Lippen wegen der grösseren Härte dieses Materials dann entsprechend dünner ausführen; als Lösungsmittel eignet sich ein Keton-Ester-Ge-misch. Weitere Stoffpaarungen sind Ethylenvinyl-azetat-Mischpolymerisat mit einem Aromaten-Keton-Gemisch als Lösungsmittel sowie Polyurethan mit einem Keton-Ester-Gemisch als Lösungsmittel. Beide genannten Kunstharze lassen sich gemeinsam mit Polyvinylchlorid (als Werkstoff des Grundkörpers) extrudieren.

Um das Lösungsmittel leichter mit dem Pinsel auf den Halteflansch auftragen zu können, dickt man es zweckmässigerweise thixotrop an, z.B. mit pulvriger Kieselsäure, wie sie unter dem Warenzeichen Aerosil auf dem Markt ist. Wenn oben allgemein von Lösungsmitteln gesprochen wird, so soll damit auch ein solches angedicktes Lösungsmittel umfasst sein. Das Dickungsmittel bleibt als abwischbarer Staub zurück oder fällt ab, wenn das Lösungsmittel verdunstet ist.

## Patentansprüche

1. Verfahren zum Aufbringen eines im Quer-schnitt U-förmigen, selbstklemmenden Profil-streifens auf einen Halteflansch, insbesondere eines Automobils, bei dem der Halteflansch zuvor mit einem flüssigen Gleitmittel benetzt wird, dadurch gekennzeichnet, dass als Gleitmittel ein den Werkstoff des Profilstreifens in dem am Halte-flansch anzuliegen bestimmten Oberflächenbe-reich anlösendes, flüchtiges Lösungsmittel ver-wendet wird, das frei von eine haftende Schicht bildenden Stoffen ist.

2. Verfahren nach Anspruch 1, dadurch gekennzeichnet, dass das Lösungsmittel ein Dickungsmittel enthält.

3. Verfahren nach Anspruch 1 oder 2, dadurch gekennzeichnet, dass ein langsam trocknendes Lösungsmittel verwendet wird.

4. Verfahren nach einem der Ansprüche 1 bis 3, dadurch gekennzeichnet, dass ein die Oberflächenschicht des Halteflanschs nicht oder nur unwesentlich anlösendes Lösungsmittel verwendet wird.

5. Verfahren zum Aufbringen eines im Quer-schnitt U-förmigen, selbstklemmenden Profil-streifens auf einen Halteflansch, insbesondere eines Automobils, bei dem der Halteflansch mit einem Gleitmittel benetzt wird, dadurch gekennzeichnet, dass als Gleitmittel ein den Werkstoff des Profilstreifens in dem am Halteflansch an-zuliegen bestimmten Oberflächenbereich an-lösendes, flüchtiges Lösungsmittel auf diesen Oberflächenbereich aufgetragen wird, das frei von eine haftende Schicht bildenden Stoffen ist.

6. Verfahren nach einem der Ansprüche 1 bis 5, dadurch gekennzeichnet, dass für den am Halte-flansch anzuliegen bestimmten Oberflächenbe-reich des Profilstreifens ein von dem Lösungsmittel leicht anlösbarer Werkstoff und für den nach der Montage sichtbaren Oberflächenbereich des Profilstreifens ein von dem Lösungsmittel nicht oder nicht wesentlich anlösbarer Werkstoff verwendet wird.

7. Verfahren nach einem der Ansprüche 1 bis 6 unter Verwendung eines Profilstreifens, der mindestens eine elastische Lippe enthält, dadurch gekennzeichnet, dass die Lippe, die eine von einem durch das Lösungsmittel anlösbaren Werkstoff gebildete Beschichtung trägt, aus einem von dem Lösungsmittel nicht oder nicht wesentlich anlösbaren Werkstoff besteht.

8. Im Querschnitt U-förmiger, selbstklemmender Profilstreifen, der auf einen Halteflansch, insbesondere eines Automobils, unter Verwendung des Verfahrens gemäss einem der Ansprüche 1 bis 7 aufzubringen ist, dadurch gekennzeichnet, dass er frei von einer Metalleinlage einen aus zeitweilig unter elastischer Verformung eine Klemmkraft erzeugenden Teil aus einem thermoplastischen Werkstoff umfasst.

9. Profilstreifen nach Anspruch 8, dadurch gekennzeichnet, dass der an dem Halteflansch anzuliegen bestimmte Oberflächenbereich geriefelt ist.

## Claims

1. A method of fitting a self-clamping profile strip, which is U-shaped in cross-section, onto a supporting flange in particular of a motor vehicle, wherein the supporting flange ist previously wetted with a fluid slip agent, characterised in that as slip agent there is used a volatile solvent which begins to soften the material of the profile strip in the surface zone intended to be applied against the supporting flange and which is free of substances forming a coating of adhesive.

2. A method according to Claim 1, characterised in that the solvent contains a thickening agent.

3. A method according to Claim 1 or Claim 2, characterised in that a slow-drying solvent is used.

4. A method according to one of Claims 1 to 3, characterised in that a solvent is used which does not begin or begins only negligibly to soften the surface layer of the supporting flange.

5. A method of fitting a self-clamping profile strip, which is U-shaped in cross-section, onto a supporting flange in particular of a motor vehicle, wherein the supporting flange is wetted with a slip agent, characterised in that as slip agent a volatile solvent, which begins to soften the material of the profile strip in the surface zone intended to be applied against the supporting flange, ist applied to this surface zone, which solvent is free of substances constituting an adhesive layer.

6. A method according to one of Claims 1 to 5, characterised in that for the surface zone of the profile strip intended to be applied against the supporting flange there is used a material which can readily begin to be softened by the solvent and for the surface zone of the profile strip visible after fitting there ist used a material which cannot begin or cannot substantially begin to be softened by the solvent.

7. A method according to one of Claims 1 to 6 using a profile strip which comprises at least one resilient lip, characterised in that the lip, which carries a coating of a material which can begin to be softened by the solvent, consists of a material which cannot begin or cannot substantially begin to be softened by the solvent.

8. A self-clamping profile strip which is U-shaped in cross-section and which is to be fitted onto a supporting flange, in particular of a motor vehicle, utilising the method according to one of Claims 1 to 7, characterised in that it consists of two different thermoplastic materials, one of which forms at least part of the surface intended to be applied against the supporting flange and the other of which produces temporarily a clamping force under elastic deformation.

9. A profile strip according to Claim 8, characterised in that the surface zone intended to be applied against the supporting flange ist grooved.

## Revendications

1. Procédé pour la pose d'une bande profilée à section en U, à auto-fixation par serrage, sur un rebord de retenue, en particulier d'une automobile, ce rebord de retenue étant au préalable humidifié avec un lubrifiant liquide, caractérisé en ce qu'on utilise, en tant que lubrifiant, un solvant volatil qui dissout l'une des matières constituant la bande profilée dans la région superficielle destinée à être appliquée sur le rebord de retenue, solvant qui est dépourvu de substances formant une couche adhérente.

2. Procédé selon la revendication 1, caractérisé en ce que le solvant contient un agent épaississant.

3. Procédé selon la revendication 1 ou 2, caractérisé en ce qu'on utilise un solvant qui sèche lentement.

4. Procédé selon l'une quelconque des revendications 1 à 3, caractérisé en ce qu'on utilise un solvant qui ne dissout pas ou ne dissout que dans une mesure négligeable la couche superficielle du rebord de retenue.

5. Procédé pour la pose d'une bande profilée à section en U, à auto-fixation par serrage, sur un rebord de retenue, en particulier d'une automobile, ce rebord de retenue étant humidifié avec un lubrifiant, caractérisé en ce qu'un solvant volatil qui dissout l'une des matières constituant la bande profilée dans la région superficielle destinée à être appliquée sur le rebord de retenue, est appliquée , en tant que lubrifiant, sur cette région superficielle, solvant qui est dépourvu de substances formant une couche adhérente.

6. Procédé selon l'une quelconque des revendications 1 à 5, caractérisé en ce qu'on utilise, pour la région superficielle de la bande profilée destinée à être appliquée sur le rebord de retenue, une matière susceptible d'être facilement dissoute par le solvant, et pour la région superficielle de la bande profilée qui est visible à la suite du montage, une matière non soluble ou soluble dans une mesure négligeable par le solvant.

7. Procédé selon l'une quelconque des revendications 1 à 6 avec utilisation d'une bande profilée qui comporte au moins une lèvre élastique, caractérisé en ce que la lèvre, qui porte en enduit fait d'une matière soluble par le solvant, est formée d'une matière non soluble ou soluble dans une mesure négligeable par le solvant.

8. Bande profilée à section en U, à auto-fixation par serrage, destinée à être posée sur un rebord de retenue, en particulier d'une automobile, par application du procédé selon l'une quelconque des revendications 1 à 7 , caractérisée en ce qu'elle se compose de deux matières thermoplastiques différentes, dont l'une constitue au moins une partie de la surface destinée à être appliquée sur le rebord de retenue et dont l'autre produit temporairement une force de serrage par déformation élastique.

9. Bande profilée selon la revendication 8, caractérisée en ce que la région superficielle destinée à être appliquée sur le rebord de retenue est striée.

Fig.1

Fig.2

Fig.3

Fig.4